(19) Europäisches Patentamt
European Patent Office
Office européen des brevets

(11) Veröffentlichungsnummer: **0 001 233**
**B1**

(12) **EUROPÄISCHE PATENTSCHRIFT**

(21) Anmeldenummer: **78100810.7**

(22) Anmeldetag: **04.09.78**

(51) Int. Cl.³: **B 01 D 13/04,**
**C 08 F 220/44**

# (54) Semipermeabele Membranen aus Acrylnitrilcopolymerisaten und ihre Anwendung

(30) Priorität: **16.09.77 DE 2741669**

(43) Veröffentlichungstag der Anmeldung:
**04.04.79 Patentblatt 79/07**

(45) Bekanntmachung des Hinweises auf die Patenterteilung:
**23.07.80 Patentblatt 80/15**

(84) Benannte Vertragsstaaten:
**CH DE FR GB NL**

(56) Entgegenhaltungen:
**DE - B - 1 089 548**
**FR - A - 2 109 104**
**FR - A - 2 223 062**
**FR - A - 2 312 278**
**FR - A - 2 365 361**
**US - A - 3 851 036**

(73) Patentinhaber: **Bayer AG**
**Zentralbereich Patente, Marken und Lizenzen**
**D - 5090 Leverkusen 1, Bayerwerk (DE)**

(72) Erfinder: **Elfert, Klaus, Dr.**
**Breslauer Strasse 31**
**D - 4150 Krefeld (DE)**
**Rosenkranz, Hans Jürgen, Dr.**
**Heinrich-Kauert-Weg 9**
**D - 4150 Krefeld (DE)**
**Wolf, Gerhard Dieter, Dr.**
**Wilhelm-Busch-Strasse 29**
**D - 4047 Dormagen 5 (DE)**
**Bentz, Francis, Dr.**
**Helenenstrasse 9**
**D - 5000 Köln (DE)**

**EP 0 001 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Semipermeabele Membranen aus Acrylnitrilcopolymerisaten und ihre Anwendung

Die Erfindung betrifft neue semipermeable Membranen aus Acrylnitrilcopolymeren und ihre Verwendung bei Umkehrosmose und Ultrafiltration.

Umkehrosmose und Ultrafiltration sind Verfahren zur Stofftrennung. Die Stofftrennung erfolgt bei diesen Trennprozessen in der Weise, daß eine wäßrige Lösung unter Druck über die Oberfläche einer semipermeablen Membran geleitet wird, wobei das Lösungsmittel und eventuell ein Teil der gelösten Stoffe die Membran passieren, während die übrigen Komponenten der Lösung an der Oberfläche der Membran zurückgehalten werden und in der Lösung aufkonzentriert werden können.

Technische Bedeutung haben hauptsächlich Membranen aus Cellulosederivaten, insbesondere Celluloseacetat. Trotz ihrer guten Leistung hinsichtlich Wasserdurchlässigkeit und Trennvermögen weisen sie auch nachteilige Eigenschaften auf, die ihre allgemeine Verwendbarkeit einschränken. Es sind dies die mangelnde Chemikalienbeständigkeit, insbesondere die Hydrolyseempfindlichkeit bei hohem und niedrigem pH-Wert sowie die Anfälligkeit gegenüber einem Abbau durch Mikroorganismen. Dies führt im Laufe der Zeit zu einer Verschlechterung der Membraneigenschaften.

Es wurden bereits Membranen aus Polyacrylnitril für die umgekehrte Osmose hergestellt, die ein bestimmtes Salzrückhaltevermögen bei allerdings geringer Wasserpermeabilität (S. W. Saltonstall Jr. et al., OSW Res. Der. Progr. Report Nr. 220 (1966)) aufwiesen. In den DE—AS 2 145 183 und 2 346 011 werden ionische Acrylnitrilcopolymerisate beschrieben, die zwar über eine hohe Wasserpermeabilität verfügen, jedoch nur zur Filtration von Lösungen makromolekularer Stoffe, d.h. zur Abtrennung von höhermolekularen Partikeln, geeignet sind.

Es stehen daher noch keine Membranen mit einer hohen Wasserpermeabilität sowie einer guten Selektivität im Bereich von Stoffen mit mittleren Molekulargewichten und ohne die vorstehend beschriebenen Nachteile der gebräuchlichen Celluloseacetatmembranen zur Verfügung.

Es wurde überraschenderweise gefunden, daß aus Disulfonimidstrukturen enthaltenden Acrylnitrilcopolymerisaten Membranen hergestellt werden können, die die nachteiligen Eigenschaften der herkömmlichen Membranen auf der Basis von Celluloseacetat nicht besitzen und eine niedrige Trenngrenze von ca. 500 sowie eine Wasserpermeabilität aufweisen, die dennoch erheblich größer ist als beispielsweise die von ausreinem Polyacrylnitril hergestellten Membranen.

Die Comonomeren des Acrylnitrils sind olefinische, Disulfonimidgruppen enthaltende Comonomere, gegebenenfalls mit anderen Comonomeren, die eine Doppelbindung enthalten und mit Acrylnitril copolymerisierbar sind.

Der Erfindung betrifft daher semipermeable Membranen, bestehend aus Disulfonimidgruppen enthaltenden Acrylnitrilcopolymerisaten, die aufgebaut sind aus copolymerisierten Einheiten von:

A) 99—50, vorzugsweise 95—80, Gew.—% Acrylnitril

B) 1 bis 50, vorzugsweise 5—20, Gew.—% eines mit Acrylnitril copolymerisierbaren äthylenisch ungesättigten Monomeren, das ein oder zwei Disulfonimidgruppierungen enthält, und

C) gegebenenfalls weiteren olefinisch ungesättigten mit Acrylnitril copolymerisierbaren Monomeren (0 bis 30 Gew.—%, vorzugsweise 0 bis 15 Gew.—%) oder deren Mischungen. Die Summe der Prozentgehalte A) bis C) beträgt 100.

Die erfindungsgemäßen Membranen besitzen einerseits eine hohe Wasserpermeabilität, sind aber andererseits in der Lage, Stoffe mit einem Molekulargewicht von 500 von solchen mit Molekulargewichten um 100 zu trennen, wobei als Maßstab für die Zurückhaltung bzw. Abtrennung das Molekulargewicht des oder der gelösten Komponenten betrachtet werden soll.

Diese Membranen werden zur Konzentrierung, Entfernung oder Gewinnung der verschiedensten Stoffe uas wäßrigen Lösungen durch Umkehrosmose, Ultrafiltration oder ähnliche Verfahren verwendet. Die vorliegende Erfindung betrifft ebenfalls die Verwendung der Membranen.

Ganz bevorzugt werden Polymere verwendet, deren Bestandteil B) ein Monomere der allgemeinen Formel

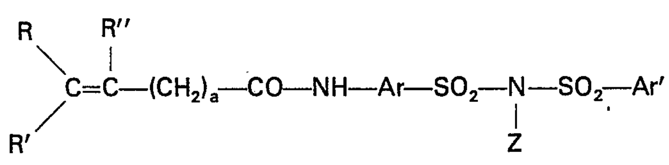

ist

worin

R, R′, R″ gleich oder voneinander verschieden, jeweils ein Wasserstoffatom oder einen Methylrest darstellen, insbesondere R und R′ Wasserstoff und R″ einen Methylrest oder Wasserstoff und

Ar einen Phenylen- oder Naphthylenrest, einen $C_1$—$C_4$-alkylierten oder halogenierten (Cl, Br) Phenylen- oder Naphthylenrest, insbesondere einen Phenylenrest, darstellt,

Ar' einen Phenyl- oder Naphthylrest, einen $C_1$—$C_4$-Alkyl-, $C_1$—$C_4$-Alkoxy- und/oder halogensubstituierten (Cl, Br) Phenyl- oder Naphthylrest, insbesondere einen Phenyl- oder Chlorphenylrest, darstellt,

Z Wasserstoff, ein Ammoniumion oder ein Alkalimetallion ist und

a die Zahl 0 oder 1 bedeutet.

Als Disulfonimidgruppen enthaltende Comonomere B) konnen grundsätzlich alle äthylenisch ungesättigten ein oder zwei Disulfonimidstrukturen enthaltenden Monomere verwendet werden, die mit Acrylnitril copolymerisierbar sind.

Beispiele für derartige Comonomere sind Verbindungen der folgenden Strukturen:

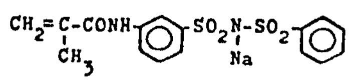
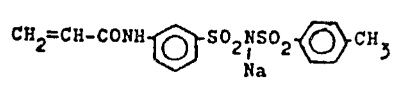

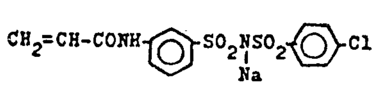
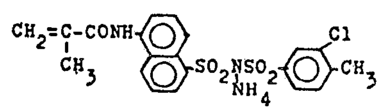

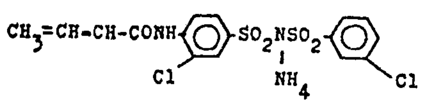
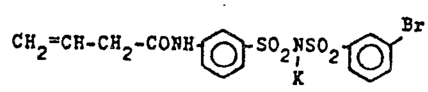

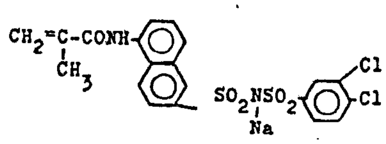
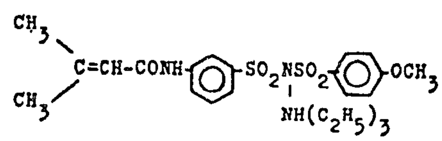

Darüber hinaus sind auch weitere Disulfonimidstrukturen enthaltende Comonomere verwendbar, sofern sie mit Acrylnitril copolymerisierbar sind. Als Beispiele sind folgende Verbindungen genannt:

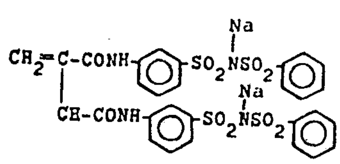
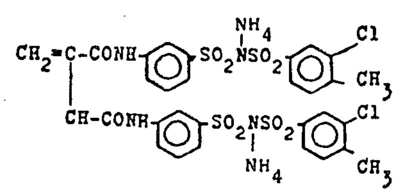

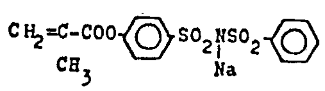
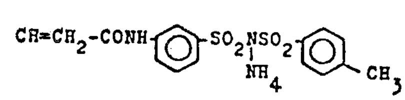

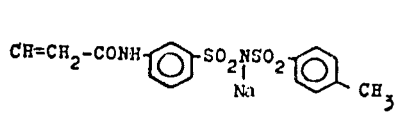
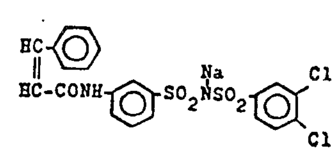

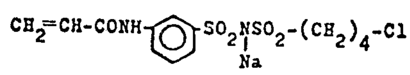
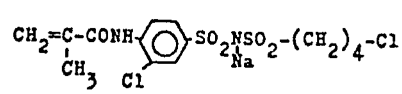

Die erfindungsgemäßen Disulfonimid enthaltenden Comonomeren lassen sich leicht nach literaturbekannten Verfahren herstellen: In erster Stufe wird eine aromatische Nitroverbindung, die eine Disulfonimidstruktur enthält, durch Umsetzung eines aromatischen Sulfonamids mit einem aromatischen Sulfochlorid, wobei eine dieser Komponenten eine Nitrogruppe tragen muß, in alkalischem Medium hergestellt. Danach wird die Nitroverbindung zur Aminoverbindung reduziert und schließlich die so erhaltene Disulfonimidstrukturen besitzende aromatische Aminoverbindung mit dem Säurechlorid einer ungesättigten Säure umgesetzt (vgl. B. Helferich und H. Slechsig, Ber. 75 (1942), S. 532 ff. sowie DE—PS 1 235 300).

Als weitere olefinisch ungesättigte, mit Acrylnitril copolymerisierbare Monomere C) seien beispielsweise genannt: (Meth)Acrylsäure, (Meth)Acrylamid, (Meth)Acrylsäurealkylester mit 1 bis 12, vorzugsweise 1 bis 4 C-Atomen in der Alkoholkomponente, Hydroxyalkyl-(meth)-acrylate mit 2 bis 4 C-Atomen in der Alkylgruppe, Sulfoalkyl-(meth)-acrylate mit 2 bis 4 C-Atomen in der Alkylgruppe, Maleinsäure, Vinylchlorid, Vinylidenchlorid—die vorstehenden Monomeren sind bevorzugt—ferner Butadien, Styrol, Fumarsäure, Maleinsäurehalbamid, das gegebenenfalls am Stickstoff durch $C_1$—$C_4$-Alkylgruppen mono- oder disubstituiert sein kann; Maleinimid, das gegebenenfalls durch $C_1$—$C_4$-Alkyl oder Phenyl am Stickstoff substituiert sein kann; Vinylpyrrolidon, Vinylpyridin oder Methacrylsäuresalicylat (Salicylsäure-O-methacrylat).

Die Herstellung der Copolymerisate aus den Monomeren A) bis C) erfolgt nach bekannten Verfahren, beispielsweise nach dem Verfahren des deutschen Patents 1 089 548.

Die erhaltenen Copolymerisate enthalten die eingebauten Monomereinheiten im wesentlichen statistisch verteilt. Obwohl es prinzipiell möglich ist, die Molekulargewichte der erfindungsgemäßen Polymerisate in weiten Grenzen nach bekannten Methoden zu variieren, sind für die Herstellung von Membranen Polymerisate mit relativen Viskositäten $\eta_{rel}$ im Bereich von etwa 1,6 bis 4,6 besonders geeignet.

Die erfindungsgemäßen Membranen eignen sich zur Abtrennung und Konzentrierung von Substanzen durch Umkehrosmose und Ultrafiltration. Man kann auf diese Weise Abwasserinhaltsstoffe im Konzentrat anreichern, während das Permeat wesentlich geringere Konzentrationen an diesen Stoffen enthält.

Die Membranen können zur Anreicherung und Rückgewinnung verwertbarer Stoffe und zur Entfernung von unerwünschten Stoffen eingesetzt werden, so z.B. bei der Behandlung von Abwässern in der Farbstoff-, Papier- und Textilindustrie.

Die aus den erfindungsgemäß verwendbaren Polymeren hergestellten Membranen sind zweckmäßig asymmetrische Membranen, die durch folgende Struktur charakterisiert sind: Die eigentliche selektive Trennschicht ist äußerst dünn und geht annähernd kontinuierlich in eine Unterschicht mit Porenstruktur aus demselben Material über, die als Träger- oder Stützschicht dient. Es ist ein Vorzug solcher Membranen, daß alle Stoffe an der Oberfläche der Membran abgetrennt werden, wo sie durch die Stömung der Beschickungslösung entfernt werden können. Auf diese Weise wird die Lebensdauer der Membranen erhöht, da sie nicht so schnell verstopfen können.

Für die Herstellung der erfindungsgemäßen Membranen wird z.B. eine homogene Lösung des entsprechenden Polymeren in einem geeigneten Lösungsmittel, vorzugsweise einem Lösungsmittel des Amid-Typs, hergestellt. 5—35 Gew.—% des Polymeren, bezogen auf die Gesamtmenge von Polymer und Lösungsmittel, werden unter Zusatz von 1—10 Gew.—% eines Alkali- oder Erdalkalisalzes, vorzugsweise LiCl, LiBr, $LiNO_3$, $MgCl_2$, $CaCl_2$, $CaBr_2$ oder eines organischen Amins wie Triäthylamin, Tripropylamin, Pyridin, Äthanolamin, Triäthanolamin in einem polaren aprotischen Lösungsmittel gelöst. Bevorzugte Lösungsmittel sind Dimethylformamid, Dimethylacetamid, N-Methylpyrrolidon, Hexamethylphosphorsäuretriamid, Dimethylsulfoxid bzw. deren Gemische. Zur Beschleunigung des Lösungsvorganges kann gegebenenfalls erwärmt werden.

Diese Gießlösung wird zur Filmherstellung verwendet, indem man sie auf eine Glas- oder Metallunterlage oder irgendeine andere geeignete Unterlage wie z.B. auf ein fortlaufendes Band oder eine Trommel in eine Schichtdicke von 150—500 $\mu$ aufträgt.

Durch eine Wärmebehandlung erreicht man ein teilweises Abdampfen des Lösungsmittels. Die Trocknung des Films erfolgt bei einer Temperatur von 40—150°C über eine Zeitdauer von 2—60 Min. Dieser Schritt kann in Abhängigkeit von den gewünschten Membraneigenschaften des Films auch ausgelassen werden.

Nach einer Abkühlphase von 10 Min. wird der Film in ein Fällungsbad getaucht und 60 Min. darin belassen. Als Flüssigkeit zur Ausfällung kommen solche Lösungsmittel in betracht, die mit dem organischen Lösungsmittel der Gießlösung mischbar sind und gegebenenfalls das Salz zu lösen vermögen, aber für das Polyamid ein Nichtlösungsmittel sind. Hierfür geeignet sind Wasser, Methanol, Äthanol. i-Propanol, gegebenenfalls unter Zusatz von Salzen wie z.B. $CaCl_2$. Bevorzugtes Fällungsmittel ist Wasser. Die Temperatur des Fällungsbades kann zwischen 0° und 50° liegen, bevorzugt zwishen 0° und 25°C.

Die erfindungsgemäßen Membranen können in Form von Folien, Röhren, Schläuchen oder Hohlfasern verwendet werden. Die Herstellungstechniken für Schläuche, Röhren und Hohlfasern entsprechen sinngemäß dem oben geschliderten Verfahren. Es werden in diesem Fall die zur Herstellung von Röhren, Schläuchen und Hohlfasern aus Polymerisatlösungen dem Fachmann bekannten Verfahren benutzt.

Zur Bestimmung der Membraneigenschaften wird die fertige Membran auf eine poröse Sinterplatte aus Metall, auf der ein Filterpapier liegt, aufgebracht, und in eine Druckfiltrationsapparatur eingesetzt, in der die verschiedenen Lösungen der Testsubstanzen in Wasser bei Raumtemperatur und unter verschiedenen Drucken an der Membranoberfläche vorbeigepumpt werden. Die Pumpleistung beträgt 21,5 l/h, die wirksame Membranfläche ca. 40 $cm^2$.

Der Durchsatz an Wasser, angegeben in Liter/$m^2$ Tag, gibt die Filtrationsleistung der Membran an.

Die prozentuale Zurückhaltung wird üblicherweise wie folgt angegeben:

$$\text{Zurückhaltung} = \left(1 - \frac{\text{Konzentration des Filtrats an gelöstem Stoff}}{\text{Konzentration der Ausgangslösung an gelöstem Stoff}}\right) \cdot 100$$

*Vergleichsbeispiel*

12 g eines Homopolymerisats des Acrylnitrils werden unter Zusatz von 3,6 g $CaCl_2$ in 84,4 g N-Methylpyrrolidon in Lösung gebracht. Aus dieser Gießlösung wurde ein Film mit 250 $\mu$ Dicke auf einer Glasplatte hergestellt und anschließend das Lösungsmittel 20 Min. bei 70°C verdampft und der Film in ein Fällungsbad (Eis/Wasser) eingetaucht. Es wurde bei 20 bar ein Wasserdurchfluß von 1100 $l/m^2d$ gemessen, die Entfernung von Kongorot betrug 99,9 %.

Die in den Beispielen angegebenen Prozente beziehen sich auf das Gewicht, sofern nicht anders vermerkt.

Beispiel 1

In 7440 ml Wasser werden 504 Gew.-Tl. Acrylnitril und 224 Vol.-Tl. einer 25 proz. wäßrigen Lösung der Verbindung folgender Formel

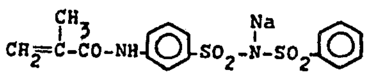

auf 50°C erwärmt. Dann wird der pH-Wert mit verdünnter Schwefelsäure auf 3 eingestellt und die Polymerisation durch Zugabe von 7 Gew.-Tl. Kaliumperoxodisulfat und 28 Gew.-Tl. Natriumsulfit gestartet. Nach 6 Stunden wird das ausgefallene Polymerisat abgesaugt, neutral gewaschen und getrocknet. Ausbeute: 505 g 90 % d.Th.) K-Wert: 91

Aus 12 g des Polymeren, 3,6 g $CaCl_2$ und 84,4 g N-Methylpyrrolidon wurden unter Rühren und Erwärmen auf 60°C eine Lösung hergestellt. Nach Filtrieren und Entfernen restlicher Luftblasen erhielt man eine gebrauchsfertige Gießlösung.

Auf eine Glasplatte wurde ein Film in einer Dicke von 250 $\mu$ aufgetragen und anschließend 20 Min. bei 60°C auf einer Heizplatte erhitzt. Nach einer Abkühlphase von 10 Min. wurde der Film in ein Eis-/Wasserbad getaucht und 30 Min. darin belassen. Während dieser Zeit löste sich der Film von der Glasplatte. Die fertige Membran wurde in Wasser bei Raumtemperatur aufbewahrt.

Diese Membran besaß einen Reinwasserdurchfluß von 4500 $l/m^2d$ bei einem Druck von 40 bar.

In der folgenden Tabelle sind die Ergebnisse, die mit dieser Membran und verschiedenen Testlösungen erzielt wurden, aufgeführt.

| Substanz | Konzentration % | % Zurückhaltung |
|---|---|---|
| NaCl | 1 | 8 |
| $Na_2SO_4$ | 1 | 14 |
| Harnstoff | 1 | 7 |
| Phenol (pH = 10) | 1 | 35 |
| Natriumbenzolsulfonat | 1 | 10 |
| Natriumdodecylsulfat | 1 | 85 |
| Fuchsin | 0,1 | 99.9 |
| Kongorot*) | 0,1 | 100 |

*) Druck 20 bar, Wasserfluß 5600 $l/m^2d$

Beispiel 2

459,2 Gew.-Tl. Acrylnitril und 100,8 Gew.-Tl der Verbindung folgender Formel

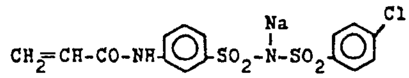

werden in 7440 Vol.-Tl Wasser gelöst. Bei 50°C wird der pH-Wert mit verdünnter Schwefelsäure auf 3 eingestellt und die Polymerisation durch Zugabe von 6,5 Gew.-Tl. Kaliumperoxodisulfat und 26 Gew.-Tl. Natriumsulfit gestartet. Das Polymerisat wird nach 6 Stunden abgesaugt, neutral gewaschen und getrocknet.

Ausbeute: 518 Gew.-Tl. (92,5 % d.Th.).

K-Wert: 89

Zur Herstellung einer Gießlösung wurden 12 g des Polymeren, 3,6 g $CaCl_2$ und 84,4 g N-Methylpyrrolidon verwendet. Die Gießlösung wurde zu einem Film von 250 $\mu$ Dicke vergossen. Das Lösungsmittel wurde 20 Min. bei 60°C verdampft und die Unterlage mit Film anschließend in Eis/Wasser eingetaucht. Diese Membran ergab bei der Prüfung die in der Tabelle aufgeführten Werte:

Reinwasserdurchfluß: 3900 l/m²d, Druck 40 bar

| Substanz | Konzentration % | Zurückhaltung % |
|---|---|---|
| NaCl | 1 | 0 |
| $Na_2SO_4$ | 1 | 5 |
| Natriumdodecylsulfat | 1 | 87 |
| Rohrzucker | 5 | 75 |
| Kongorot | 0,1 | 100 |

Beispiel 3

Unter Stickstoff werden bei 50°C 448 Gew.-Tl. Acrylnitril, 28 Gew.-Tl. Acrylsäuremethylester und 224 Gew.-Tl. einer 25 % wäßrigen Lösung der Verbindung folgender Formel

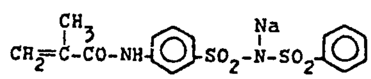

gelöst und der pH-Wert mit verdünnter Schwefelsäure auf 3 eingestellt. Nach Zugabe von 5,5 Gew.-Tl. Kaliumperoxodisulfat und 22 Gew.-Tl. Natriumsulfit wird 6 Stunden nachgerührt, abgesaugt, neutral gewaschen und getrocknet.

Ausbeute: 498 Gew.-Tl. (89 % d.Th.).

K-Wert: 86,5

15 g des Polymeren und 45 g $CaCl_2$ wurden in 80,5 g N-Methylpyrrolidon gelöst. Die Gießlösung wurde zur Herstellung eines 250 $\mu$ dicken Filmes verwendet, der 10 Min. bei einer Temperatur von 70°C getrocknet wurde. Anschließend wurde der Film in ein Eis/Wasserbad eingebracht. Diese Membran hatte folgende Eigenschaften:

Reinwasserdurchfluß: 1500 $l/m^2d$, Druck: 40 bar

| Substanz | Konzentration % | % Zurückhaltung |
|---|---|---|
| NaCl | 1 | 15 |
| $Na_2SO_4$ | 1 | 16 |
| Harnstoff | 1 | 18 |
| Phenol | 1 | 15 |
| Phenol (pH = 10) | 1 | 30 |
| Natriumbenzolsulfonat | 1 | 12 |
| Natriumdodecylsulfat | 1 | 93 |
| Rohrzucker | 5 | 82 |
| Kongorot | 0,1 | 100 |

**Patentansprüche**

1. Semipermeable Membranen, bestehend aus Disulfonimidgruppen enthaltenden Acrylnitrilcopolymerisaten, die aufgebaut sind aus copolymerisierten Einheiten von

A) 99—50 Gew.—% Acrylnitril

B) 1—50 Gew.—% eines mit Acrylnitril copolymerisierbaren, ethylenisch ungesättigten Monomeren, das ein oder zwei Disulfonimidgruppierungen enthält, und

C) gegebenenfalls weiteren olefinisch ungesättigten, mit Acrylnitril copolymerisierbaren Monomeren oder deren Mischungen.

2. Semipermeable Membranen nach Anspruch 1, dadurch gekennzeichnet, daß der Bestandteil B ein Monomeres der allgemeinen Formel

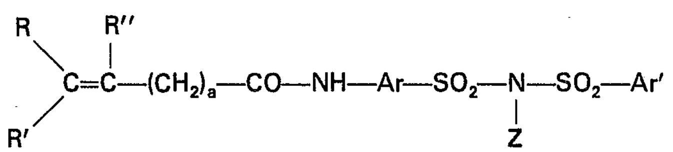

ist,
worin

R, R′, R″ gleich oder voneinander verschieden, jeweils ein Wasserstoffatom oder einen Methylrest darstellen,

Ar ein Phenylen- oder Naphthylenrest, ein $C_1$—$C_4$-alkylierter oder ein durch Chlor oder Brom halogenierten Phenylen- oder Naphthylenrest ist,

Ar′ einen Phenyl- oder Naphthylrest, einen $C_1$—$C_4$-Alkyl-, einen $C_1$—$C_4$-Alkoxyrest und/oder halogensubstituierten Phenyl- oder Naphthylrest darstellt,

Z Wasserstoff, ein Ammoniumion oder ein Alkalimetallion ist und

a die Zahl 0 oder 1 bedeutet.

3. Verwendung der semipermeablen Membranen nach Ansprüchen 1 und 2 Zur Umkehrosmose und Ultrafiltration.

**Claims**

1. Semi-permeable membranes consisting of acrylonitrile copolymers containing disulphonimide groups, which are made up of copolymerised units of

A) from 99 to 50% by weight, of acrylonitrile;

B) from 1 to 50% by weight, of an ethylenically unsaturated monomer, containing one or two disulphonimide groups, which is able to be copolymerised with acrylonitrile, and

C) optionally other olefinically unsaturated monomers which are able to be copolymerised with acrylonitrile, or mixtures thereof.

2. Semi-permeable membranes according to claim 1 characterised in that constituent B is a monomer corresponding to the following general formula:

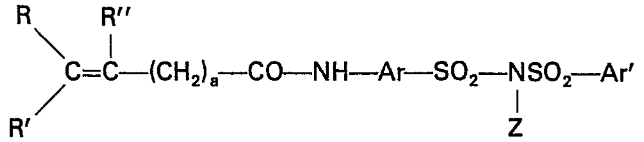

wherein

R, R′ and R″ which may be the same or different, each represent a hydrogen atom or a methyl radical;

Ar represents a phenylene or naphthylene radical a $C_1$—$C_4$-alkylated phenylene or naphthylene radical, or a phenylene or naphthylene radical halogenated by chlorine or bromine;

Ar′ represents a phenyl or naphthyl radical or a phenyl or naphthyl radical substituted by a $C_1$—$C_4$-alkyl radical or a $C_1$—$C_4$ alkoxy radical and/or by halogen

Z represents hydrogen, an ammonium ion or an alkali metal ion and

a represents the integer 0 or 1.

3. The use of the semi-permeable membranes according to claims 1 and 2 for reverse osmosis and ultrafiltration.

**Revendications**

1. Membranes semi-perméables consistant en copolymères de l'acrylonitrile qui contiennent des groupes disulfonimides et qui sont constituées de motifs copolymérisés de:

A) 99 à 50% en poids d'acrylonitrile,

B) 1 à 50% en poids d'un monomère à insaturation éthylénique portant un ou deux groupements disulfonimides et copolymérisable avec l'acrilonitrile, et

C) le cas échéant, d'autres monomères à insaturation oléfinique copolymérisables avec l'acrylonitrile ou leurs mélanges.

2. Membranes semi-perméables selon la revendication 1, caractérisées en ce que le constituant B est un monomère qui répond à la formule générale:

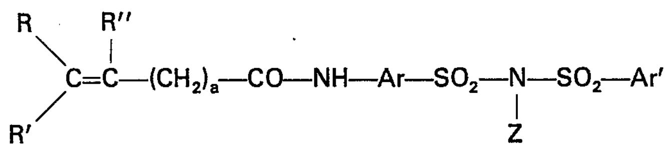

dans laquelle,

R, R′, et R″, identiques ou différents, représentent chacun un atome d'hydrogène ou un groupe méthyle, et

Ar représente un groupe phénylène ou naphtylène, un groupe phénylène ou naphtylène portant un substituant alkyle en $C_1$—$C_4$ ou un group phénylène ou naphtylène halogéné par du chlore ou du brome,

Ar′ représente un group phényle ou naphtyle, un groupe phényle ou naphtyle portant un substituant alkyle en $C_1$—$C_4$, alcoxy en $C_1$—$C_4$ et/ou halogéno,

Z représente l'hydrogène, un ion ammonium ou un ion de métal alcalin et

a est égal à 0 ou 1.

3. Utilisation des membranes semi-perméables selon les revendications 1 et 2 pour l'osmose inverse et l'ultrafiltration.